# EUROPÄISCHE PATENTANMELDUNG

(11) **EP 1 696 295 A1**
(43) Veröffentlichungstag der Anmeldung: **30.08.2006**
(21) Anmeldenummer: 05004138.3
(22) Anmeldetag: 25.02.2005
(51) Int. Cl.: G05B 23/02

(54) **Verfahren und Vorrichtung zur Datenauswertung, Computerprogrammprodukt und computerlesbares Medium**

(71) Anmelder: SIEMENS AKTIENGESELLSCHAFT, 80333 München (DE)
(72) Erfinder: Bode, Andreas, 91315 Höchstadt (DE); Uhlmann, Werner, 90427 Nürnberg (DE)

(57) **Zusammenfassung**

Insbesondere bei Anlagenüberwachungen werden Daten, beispielsweise in Form einer Folge von zeitlich nacheinander eingehenden Datenwerten (31, 33), üblicherweise nur dann in Form eines Richtwertes abgespeichert, wenn ein relevantes Ereignis vorliegt. Dazu wird ein Verfahren zur Datenauswertung genutzt, bei dem ein Richtwert und eine eine Abweichung vom Richtwert angebende Bandbreite zur Beurteilung, ob ein Ereignis vorliegt, festgelegt wird. Bei stark verrauschten Daten besteht das Problem, dass bei zu niedriger Bandbreite vor allem Rauschereignisse registriert werden, was zu einer erhöhten Datenmenge führt. Bei zu großer Bandbreite kann ein Ereignis verloren gehen. Deshalb ist gemäß dem neuen Konzept des Verfahrens (1) vorgesehen, dass entschieden wird, ob ein aus den Datenwerten (31, 33) ermittelter Glättwert (GW) außerhalb oder innerhalb der Bandbreite (BB) liegt; und (a) für den Fall, dass der Glättwert (GW) außerhalb der Bandbreite (BB) liegt, ein weiterer Richtwert (RW) auf Grundlage eines oder mehrerer aktueller Datenwerte angenommen wird, und (b) für den Fall, dass der Glättwert (GW) innerhalb der Bandbreite (BB) liegt, der bestehende Richtwert (RW) beibehalten wird, und der aktuelle Datenwert als Teil eines Ergebnisses ausgegeben wird.

## Beschreibung

Die Erfindung betrifft ein Verfahren zur Datenauswertung einer Folge von Datenwerten, bei dem ein Richtwert und eine eine Abweichung vom Richtwert angebende Bandbreite zur Beurteilung, ob bei den Datenwerten ein Ereignis vorliegt, festgelegt wird. Die Erfindung betrifft auch eine Vorrichtung zur Datenauswertung einer Folge von Datenwerten, aufweisend Mittel zum Festlegen eines Richtwertes und einer eine Abweichung vom Richtwert angebende Bandbreite zur Beurteilung, ob ein Ereignis vorliegt; und Mittel zur Annahme eines ersten Datenwertes als Richtwert. Die Erfindung betrifft auch ein Computerprogrammprodukt und ein computerlesbares Medium.

Technische Anlagen und insbesondere großtechnische Anlagen erfordern in der Regel eine Überwachung. Die Überwachung erfolgt zweckmäßigerweise anhand einer Folge von Datenwerten, die die Anlage charakterisierend beschreiben und beispielsweise durch eine Messung eines Netzsignals ermittelt werden können. Beispielsweise im Kraftwerksbereich erfolgt dies dadurch, dass von einer Sensorik aufgenommene Prozessdaten eines in der Anlage ablaufenden Prozesses erfasst und zu einem Datenauswertsystem, beispielsweise in Form einer Prozessleitkonsole, übermittelt werden. In der Regel handelt es sich dabei um zeitlich linear eingehende Prozessdaten, die beispielsweise über eine Telefonstandleitung oder in anderer Form übermittelt werden. Zur Auswertung der Daten ist es, insbesondere im Rahmen einer Anlagenüberwachung, sinnvoll, eine Auswertung eines Datenwertes möglichst zeitnah zu dem eingehenden Datenwert vorzunehmen, um bei einem in der Anlage auftretenden Ereignis angemessen und vor allem zeitnah reagieren zu können. Andernfalls wäre bei einer Steuerung der Anlage gegebenenfalls eine unangemessene Zeitverzögerung zum Ereignis in Kauf zu nehmen.

Beispielsweise ist es für die Analyse von Turbinendaten erforderlich, aussagekräftige Prozessdaten festzuhalten. Üblicherweise werden diese aus verschiedenen Quellen gewonnen, zusammengeführt und in ein auswertbares Format überführt. Bei bestimmten Anwendungsfällen, wie beispielsweise im Falle von Schwingungs- oder Akustikkennwerten, können die Daten aufgrund der zugrunde liegenden von der Sensorik erfassten Nutzsignale sehr stark verrauscht sein. Oftmals treten auch sehr schnelle Änderungen des Nutzsignals auf.

Dabei stellt sich grundsätzlich das Problem, wie ein Ereignis im Sinne der Datenauswertung zu diskriminieren ist. Dazu wird in der Regel ein Richtwert und eine eine Abweichung vom Richtwert angebende Bandbreite zur Beurteilung, ob ein Ereignis vorliegt, festgelegt. Dabei wird ein Datenwert üblicherweise nur dann als ein Richtwert gespeichert oder anders registriert, wenn sich ein dem Datenwert zugrunde liegender Messwert hinreichend geändert hat, d. h. wenn der Datenwert außerhalb der Bandbreite liegt. Damit, insbesondere bei Sicherheitsauflagen genügenden Prozessen, kein Ereignis verloren geht, sollte die Bandbreite möglichst gering gewählt werden. Bei stark verrauschten Daten führt dies zu einer vorwiegenden Registrierung von bloßen Rauschereignissen und dies wiederum führt zu einer verhältnismäßig großen Datenflut, die entweder schlecht handhabbar ist oder zumindest unübersichtlich ist. Letzteres erschwert die Prozessführung.

Zur Verminderung des Datenaufkommens ist es zum Teil möglich, vor der Speicherung eines Datenwertes durch eine Mittelwertbildung oder eine gewichtete oder andere modifizierte Mittelwertbildung der zugrunde liegenden Messwerte, das Rauschen zu unterdrücken und erst danach eine Speicherung vorzunehmen. Dies hat jedoch den Nachteil, dass rauschnahe Ereignisse verloren gehen oder eine Prozessführung aufgrund der mangelhaften Datenauswertung fehlerhaft ist; d.h. die Sensitivität einer solchen durch Mittelwertbildung beeinflussten Datenauswertung ist stark herabgesetzt.

Bei bisher üblichen Verfahren besteht also je nach dem, ob oder ob keine Mittelung eingesetzt wird im Falle eines hohen Verhältnisses von Rauschpegel zum Nutzsignalpegel, also insbesondere einem Verhältnis nahe 1, entweder keine signifikante Datenreduktion oder aber Ereignisse werden nicht erkannt. Zudem werden bei einer oben genannten einfachen Mittelwertbildung der zugrunde liegenden Messwerte sprunghafte oder plötzliche Änderungen des Nutzsignals im Falle einer Mittelung nur abgeschwächt registriert, d. h. Signalspitzen werden in aller Regel reduziert. Tatsächliche plötzliche Änderungen können nicht mehr nachvollzogen werden, wenn vor einer Speicherung eines Datenwertes eine Mittelung durchgeführt wird.

Wünschenswert wäre es, eine Datenreduktion zu erreichen und dabei dennoch zu vermeiden, dass ein Ereignis verloren geht.

An dieser Stelle setzt die Erfindung an, deren Aufgabe es ist, ein Verfahren und eine Vorrichtung anzugeben, bei der eine gleichzeitig zuverlässige als auch übersichtliche Ereigniserkennung möglich ist. Insbesondere soll eine zuverlässige Ereigniserkennung selbst im Falle einer Mittelung und signifikanten Datenreduktion erreichbar sein.

Hinsichtlich des Verfahrens wird die Aufgabe durch ein eingangs genanntes Verfahren zur Datenauswertung gelöst, bei dem
- ein Richtwert und eine eine Abweichung vom Richtwert angebende Bandbreite zur Beurteilung, ob bei den Datenwerten ein Ereignis vorliegt, festgelegt wird;
   und bei dem erfindungsgemäß
- entschieden wird, ob ein aus den Datenwerten ermittelter Glättwert außerhalb oder innerhalb der Bandbreite liegt; und
- (a) für den Fall, dass der Glättwert außerhalb der Bandbreite liegt, ein weiterer Richtwert auf Grundlage eines oder mehrerer Datenwerte angenommen wird, und
- (b) für den Fall, dass der Glättwert innerhalb der Bandbreite liegt, der bestehende Richtwert beibehalten wird; und
- der aktuelle Datenwert als Teil eines Ergebnisses angegeben wird.

Entsprechend sieht eine Vorrichtung zur Datenauswertung einer Folge von Datenwerten vor:
- Mittel zum Festlegen eines Richtwertes und einer eine Abweichung vom Richtwert angebenden Bandbreite zur Beurteilung, ob ein Ereignis bei den Datenwerten vorliegt;
   und erfindungsgemäß
- Mittel zur Ermittlung eines Glättwertes aus den Datenwerten; und
- Mittel zur Entscheidung, ob der Glättwert außerhalb oder innerhalb der Bandbreite liegt;
- (a) Mittel zur Annahme eines weiteren Richtwerts auf Grundlage eines oder mehrerer aktueller Datenwerte, für den
   Fall, dass der Glättwert außerhalb der Bandbreite liegt, und
- (b) Mittel zum Beibehalten des bestehenden Richtwertes, für den Fall, dass der Glättwert innerhalb der Bandbreite liegt; und
- (c) Mittel zum Angeben des aktuellen Datenwerts als Teil eines Ergebnisses.

Das genannte Verfahren und die Vorrichtung gemäß dem erfindungsgemäßen Konzept kann ganz allgemein auf beliebige, ein-oder mehrdimensionale Datenfelder angewendet werden.

Bei dem Verfahren wird mit anderen Worten z.B. zu einem zu registrierenden, zweiten Datenwert ein Glättwert ermittelt und aufgrund des Glättwertes entschieden, ob ein Ereignis vorliegt oder ob nicht. Das heißt, es wird anhand des Glättwertes, anstatt anhand des zweiten Datenwertes, entschieden, ob ein Ereignis vorliegt. Es wird entschieden, ob der Glättwert außerhalb oder innerhalb der Bandbreite liegt. Für den Fall, dass der geglättete Wert (Glättwert) stärker als durch die Bandbreite vorgegeben vom zuletzt festgehaltenen Richtwert, z.B. in Form eines ersten Datenwertes, abweicht, wird allerdings nicht der Glättwert, sondern der zu diesem Zeitpunkt gültige tatsächliche Wert, nämlich der zweite Datenwert im Original als weiterer Richtwert angenommen. Der zweite Datenwert wird insbesondere als weiterer Richtwert gespeichert und dient somit als Ausgangswert für eine Entscheidung betreffend die Speicherung des nächsten Richtwertes. Zusammenfassend wird also eine Entscheidung, ob sich ein Datenwert tatsächlich signifikant geändert hat aufgrund des Glättwertes getroffen. Dennoch wird der tatsächliche Originalwert in Form des zweiten Datenwertes als Richtwert angenommen.

Dies hat den Vorteil, dass zunächst sichergestellt ist, dass für den Fall, dass ein Ereignis vorliegt, das Ereignis in seiner Originalstärke registriert wird. Grundsätzlich erfolgt also eine Festlegung des den Auswerteverlauf festlegenden Richtwertes anhand eines Originaldatenwertes. Damit können selbst plötzliche Ereignisse im Original festgehalten werden, so dass beispielsweise instantane Signalspitzen im Original registriert werden können, ohne dass diese durch eine Mittelung wie im Stand der Technik reduziert wären und die Gefahr bestünde, dass sie verloren gingen. Der Nutzer des Verfahrens ist also in der Lage, sämtliche Ereignisse auszuwerten.

Darüber hinaus garantiert das Verfahren gemäß dem neuen Konzept auch eine deutliche Signalmengenreduktion, da der Glättwert als Grundlage für die Entscheidung, ob sich ein Datenwert signifikant geändert hat, angenommen wird. Dies hat zur Folge, dass im Falle stark verrauschter Daten nicht jeder Rauschwert dazu führt, dass ein vermeintliches Ereignis registriert wird. Vielmehr führt die Glättung zu einer Rauschschwellenreduzierung, die zweckmäßigerweise so gewählt ist, dass sie innerhalb der Bandbreite verbleibt. Ein Ereignis wird somit also nur im Falle eines tatsächlichen Auftretens registriert. Zusammenfassend ist es gemäß dem neuen Konzept nicht nur möglich, aufgrund der durchgeführten Glättung ein Ereignis klarer und zuverlässiger zu erkennen und eine Datenreduktion zu erreichen, sondern darüber hinaus auch garantiert, dass ein Ereignis in seiner Originalstärke festgehalten wird.

Die Vorrichtung gemäß dem neuen Konzept kann grundsätzlich durch die zweckmäßige Implementierung von digitalen Schaltkreisen bevorzugter Art realisiert werden, wobei gegebenenfalls eine sehr kompakte Ausführung, beispielsweise in Form eines einfachen Computers erreicht werden kann. Insbesondere kann je nach Komplexität einer zu überwachenden Prozessanlage die Vorrichtung als ein Computer oder eine Leitstandskonsole je nach Bedarf realisiert werden. Dabei kann ein Prozessor oder eine andere Regeleinheit oder ein Speicherelement oder eine Kombination derselben die Funktionen der in den Ansprüchen genannten Mittel übernehmen.

Vorteilhafte Weiterbildungen der Erfindung sind den Unteransprüchen zu entnehmen und geben im Einzelnen vorteilhafte Möglichkeiten an, das genannte Verfahren und die Vorrichtung gemäß dem erfindungsgemäßen Konzept zu realisieren.

Insbesondere ist, wie oben beispielhaft erläutert, bei dem Verfahren vorgesehen, dass
- ein erster Datenwert als Richtwert angenommen wird;
- ein zweiter Datenwert angenommen wird;
- zu dem zweiten Datenwert der Glättwert ermittelt wird, und
- (a) für den Fall, dass der Glättwert außerhalb der Bandbreite liegt, der zweite Datenwert als der weitere Richtwert angenommen wird, und
- (b) für den Fall, dass der Glättwert innerhalb der Bandbreite liegt, der bestehende Richtwert beibehalten wird.

Entsprechend sind bei der Vorrichtung zur Datenauswertung darüber hinaus vorteilhaft vorgesehen:
- Mittel zur Annahme eines ersten Datenwertes als Richtwert;
- Mittel zur Annahme eines zweiten Datenwertes;
- Mittel zur Ermittlung eines Glättwertes zu dem zweiten Datenwert; wobei
- (a) die Mittel zur Annahme als Mittel zur Annahme des zweiten Datenwertes als den weiteren Richtwert, für den Fall, dass der Glättwert außerhalb der Bandbreite liegt, ausgebildet sind
   und
- (b) die Mittel zum Beibehalten als Mittel zum Beibehalten des ersten Datenwertes als Richtwert, für den Fall, dass der Glättwert innerhalb der Bandbreite liegt, ausgebildet sind.

Vorteilhaft wird ein Glättwert ermittelt, indem
- zu dem zweiten Datenwert eine Anzahl von den zweiten Datenwert umgebenden Datenwerten gewählt wird; und
- mit einer Filterfunktion unter Berücksichtigung des zweiten Datenwertes und der weiteren Anzahl von den zweiten Datenwert umgebenden Datenwerten der Glättwert berechnet wird.

Die Anzahl von den zweiten Datenwert umgebenden Datenwerten werden vorzugsweise in Form eines zweckmäßig gewählten Arrays um den zweiten Datenwert herum platziert. Dies hat den Vorteil, dass eine um den zweiten Datenwert herum gleichmäßig vorgenommene Glättung erreicht wird. Dies ist in der Regel eine Voraussetzung für die realistische Wiedergabe von Prozessdaten.

Gemäß einer besonders bevorzugten Weiterbildung des Verfahrens ist das Verfahren zur Datenauswertung in Form eines zeitlich linearen Verfahrens zur Aufnahme von Datenwerten in Form von Prozessdaten gebildet. Das heißt, das Verfahren wird zur Datenauswertung von eindimensional, im zeitlichen Verlauf hintereinander anfallenden Prozessdaten genutzt. Dabei ist insbesondere zu berücksichtigen, dass ein zeitlich lineares Verfahren in der Regel online, d. h. bei laufendem Prozess durchgeführt werden soll, und eine Prozessanalyse aktuell und zeitlich wiedergeben soll.

Diese und die oben erläuterten Voraussetzungen werden besonders vorteilhaft durch ein zeitlich lineares Verfahren zur Datenauswertung erreicht, bei dem
- ein Richtwert und eine eine Abweichung vom Richtwert angebende Bandbreite zur Beurteilung, ob ein Ereignis vorliegt, festgelegt wird;
- ein erster Datenwert als Richtwert gespeichert wird; und bei dem erfindungsgemäß
- ein zweiter Datenwert festgehalten wird;
- zu dem zweiten Datenwert ein Glättwert ermittelt wird;
- entschieden wird, ob der Glättwert außerhalb oder innerhalb der Bandbreite liegt;
- für den Fall, dass der Glättwert außerhalb der Bandbreite liegt, der zweite Datenwert als nächster Richtwert gespeichert wird, und
für den Fall, dass der Glättwert innerhalb der Bandbreite liegt, der erste Datenwert als Richtwert beibehalten wird.

Insbesondere ist, betreffend die Glättung, vorgesehen, dass der Glättwert ermittelt wird, indem
- zu dem zweiten Datenwert eine erste Anzahl von dem zweiten Datenwert vorhergehenden Datenwerten gewählt wird und eine zweite Anzahl von dem zweiten Datenwert nachfolgenden Datenwerten gewählt wird; und
- mit einer Filterfunktion unter Berücksichtigung des zweiten Datenwertes und der ersten und zweiten Anzahl von Datenwerten der Glättwert berechnet wird. Mit anderen Worten: Die bei einem zeitlich linearen Verfahren vorzunehmende Glättung wird zeitversetzt durchgeführt, um auch dem zweiten Datenwert nachfolgende Datenwerte bei der Glättung mitzuberücksichtigen.

Diese Art der Durchführung der Glättung kann insbesondere bei Verfahren angewendet werden, die online ablaufen. Für den nicht-online Betrieb kann gegebenenfalls auch auf bereits gespeicherte Daten zugegriffen werden.

Vorzugsweise wird die Filterfunktion in Form eines eindimensionalen Biominalfilters gebildet, was sich bei Prozessdaten als besonders zweckmäßig erwiesen hat. Je nach Anwendungsfall kann die Filterfunktion auch in anderer Form, z. B. in Form eines eindimensionalen Rechteckfilters, gebildet sein.

Die Erfindung führt auch auf ein Computerprogrammprodukt, welches auf einem computerlesbaren Medium speicherbar ist und welches einen Softwarecodeabschnitt aufweist, welcher geeignet ist, eine Computervorrichtung zur Ausführung des Verfahrens gemäß dem oben erläuterten Konzept zu veranlassen, wenn das Produkt auf der Computervorrichtung ausgeführt wird.

Weiters führt die Erfindung auf ein computerlesbares Medium, auf dem das Computerprogrammprodukt gespeichert ist.

Während sich die Erfindung als besonders nützlich für die Anwendung betreffend eine Prozessanalyse zur Überwachung einer Turbine erweist und in diesem Sinne insbesondere zur Anwendung bei großtechnischen Anlagen zu verstehen ist und während die Erfindung im Folgenden im Detail auch anhand von Beispielen aus diesem Bereich beschrieben wird, so sollte dennoch klar sein, dass das hier beschriebene Konzept der Erfindung, wie beansprucht, ebenfalls nützlich im Rahmen von anderen Anwendungen ist, welche außerhalb des Industrieanlagenbereichs liegen. Beispielsweise könnte das vorgestellte Konzept auch, wie beansprucht, für mehrdimensionale Datenfelder angewendet werden.

Ausführungsbeispiele der Erfindung werden nun nachfolgend anhand der Zeichnung beschrieben. Diese soll die Ausführungsbeispiele nicht maßgeblich darstellen, vielmehr ist die Zeichnung, wo zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen. Im Einzelnen zeigt die Zeichnung in:
- FIG 1: ein Flussdiagramm zur Beschreibung des grundsätzlichen Ablaufs eines Verfahrens gemäß einer besonders bevorzugten Ausführungsform;
- FIG 2: eine schematisierte Darstellung einer Abfolge von Datenwerten, bei denen anhand einer mittels von Glättwerten erstellten Entscheidungskurve zwischen Ereignissen einerseits und Rauschen andererseits bei den Datenwerten unterschieden wird; und
- FIG 3: den Vergleich zweier im Rahmen einer Datenauswertung gewonnener Prozessverlaufskurven zusammen mit den Rohdatenwerten des Nutzsignals, wobei eine erste Kurve lediglich auf einer üblichen Mittelung der Rohdatenwerte beruht und eine zweite Kurve auf der Anwendung der besonders bevorzugten Ausführungsform des Verfahrens beruht.

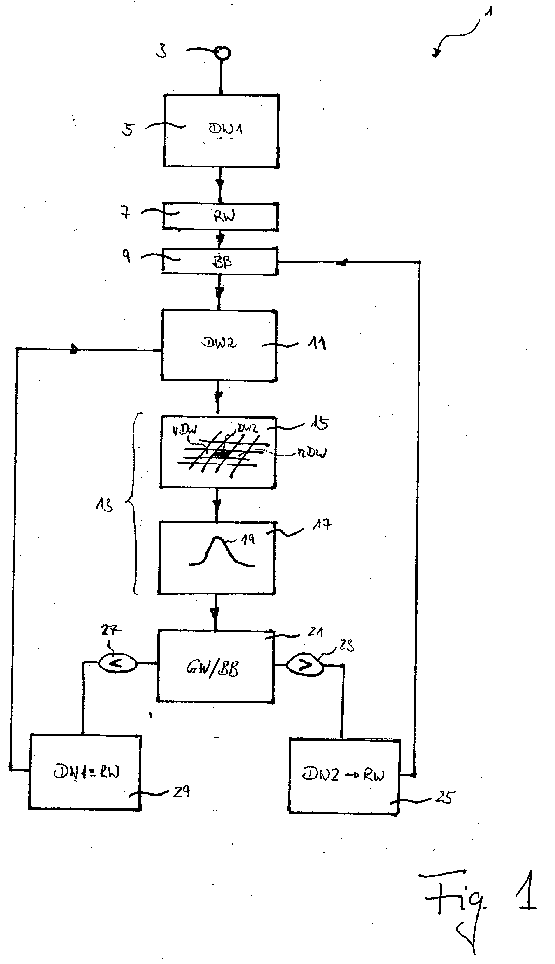

FIG 1 zeigt ein schematisches Flussdiagramm des Verfahrensablaufs einer bevorzugten Ausführungsform des Verfahrens zur Datenauswertung in Form eines Prozessanalyseverfahrens einer Prozessleitkonsole für die Überwachung einer Turbine.

Nach dem Start 3 des Datenauswertverfahrens 1 wird ein erster Datenwert DW1 im Annahmeschritt 5 festgehalten. Dieser erste Datenwert DW1 oder aufgrund dieses Datenwertes DW1, z.B. ein Funktionswert f(DW1), wird in einem Speicherschritt 7 als Richtwert RW gespeichert. Für diesen Richtwert RW wird in einem Einstellungsschritt 9 eine Bandbreite BB angegeben, die eine je nach Art und Größe des Richtwerts RW zu quantifizierende Abweichung vom Richtwert RW angibt. Die Bandbreite BB dient zur Beurteilung, ob bei einem nachfolgenden Datenwert, z. B. Datenwert DW2, ein Ereignis vorliegt oder ob dies nicht der Fall ist.

In einem weiteren Annahmeschritt 11 wird ein zweiter Datenwert DW2 festgehalten. Zu dem zweiten Datenwert DW2 wird in nachfolgenden Filterschritten 13, zunächst in einem ersten Auswahlschritt 15, eine erste Anzahl von dem zweiten Datenwert DW2 vorhergehenden Datenwerten vDW und eine zweite Anzahl von dem zweiten Datenwert DW2 nachfolgenden Datenwerten nDW gewählt. In dem nachfolgenden Filterschritt 17 wird mit einer Filterfunktion 19 unter Berücksichtigung des zweiten Datenwertes DW2 und der ersten Anzahl von Datenwerten vDW und der zweiten Anzahl von Datenwerten nDW ein Glättwert GW berechnet. Im Entscheidungsschritt 21 wird entschieden, ob der Glättwert GW außerhalb oder innerhalb der Bandbreite BB liegt. Für den Fall 23, dass der Glättwert GW außerhalb der Bandbreite BB liegt, wird der zweite Datenwert DW2 oder aufgrund des Datenwertes DW2, z.B. ein Funktionswert f(DW2), im Speicherschritt 25 als Richtwert RW gespeichert. In diesem Fall wird für den über den zweiten Datenwert DW2 neu festgelegten, nächsten Richtwert RW gegebenenfalls auch eine neue Bandbreite im Schritt 9 festgelegt. Danach kann, wie bereits im Zusammenhang mit dem Annahmeschritt 11 erläutert wurde, ein neuer Datenwert festgehalten werden.

Für den Fall 27, dass der Glättwert GW innerhalb der Bandbreite BB liegt, wird der erste Datenwert DW1, oder beispielsweise der Funktionswert f(DW1), als Richtwert RW beibehalten. Gegebenenfalls kann im Schritt 29 die Speicherung des Datenwertes 1 als Richtwert bestätigt werden. Danach kann, wie im Zusammenhang mit dem Annahmeschritt 11 erläutert wurde, ein neuer Datenwert festgelegt werden.

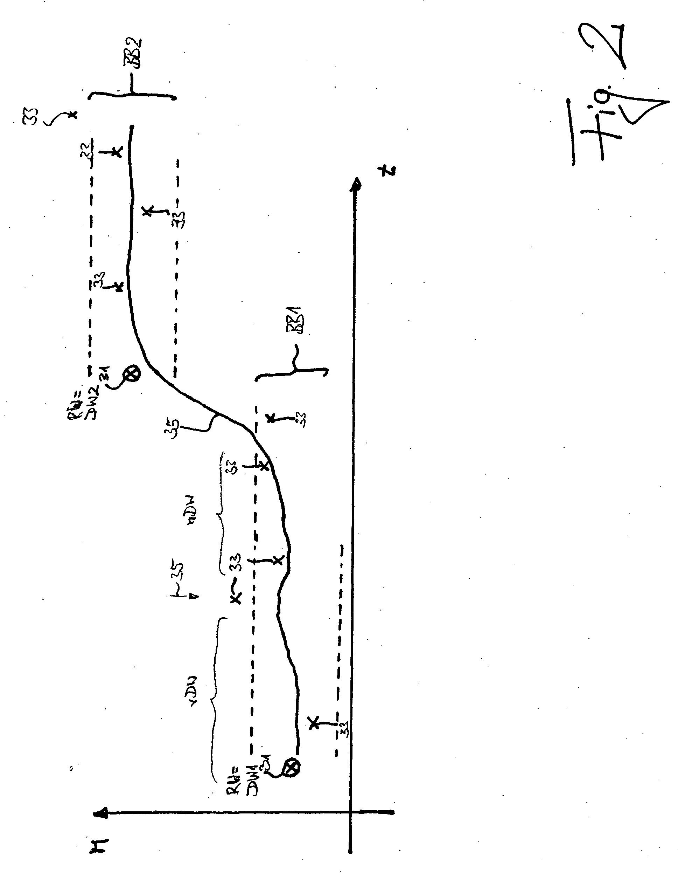

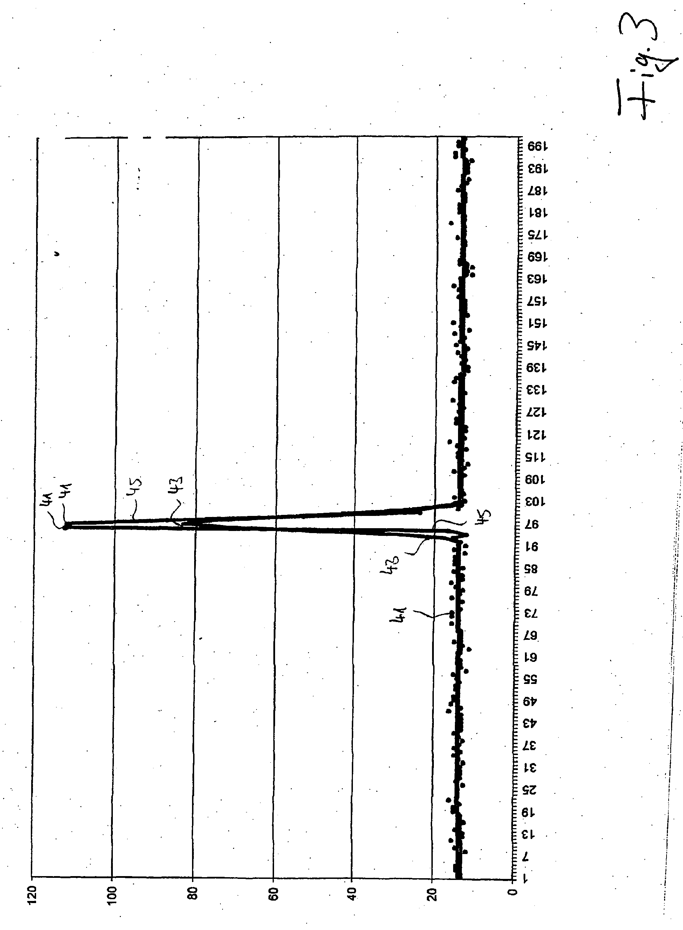

Die Vorteile des hier beschriebenen Verfahrens, nämlich einerseits die Tatsache, dass ein Ereignis in seiner Originalstärke festgehalten wird und andererseits dennoch eine beträchtliche Datenreduktion, die mehrere Größenordnungen betragen kann, erreicht wird, werden im Zusammenhang mit den nachfolgenden FIG 2 und FIG 3 deutlich.

Zunächst zeigt FIG 2 die Auftragung einer Anzahl von im Rahmen des Verfahrens gemessenen und ausgewerteten Messwerten M, die über die Zeit t aufgetragen sind. Dabei wurden für gleiche Elemente die gleichen Bezugszeichen wie in FIG 1 benutzt. Die Messwerte M stellen zum einen Datenwerte 31 dar, die als Richtwerte RW angenommen werden. Dies betrifft den Datenwert DW1 und den Datenwert DW2. Darüber hinaus sind Messwerte M mit dem Bezugszeichen 33 dargestellt, die Rauschwerte darstellen. Die Rauschwerte 33 zeichnen sich insbesondere dadurch aus, dass sie innerhalb einer Bandbreite BB zum Richtwert RW liegen. Darüber hinaus zeigt FIG 2 eine Entscheidungskurve 35, die sich durch Glättung der Messwerte, also der die im Zusammenhang mit FIG 1 beschriebenen Rauschwerte 33 und Richtwerte 31 ergibt. Die Entscheidungskurve 35 stellt also eine Anzahl von Glättwerten dar. Dementsprechend wird anhand der Entscheidungskurve 35 entschieden, ob ein Glättwert außerhalb einer vorgegebenen Bandbreite BB bzgl. eines Richtwertes 31 liegt oder innerhalb der Bandbreite BB. Dagegen wird allerdings ein solcher Glättwert der Entscheidungskurve 35 nicht zur Speicherung genutzt, sondern vielmehr der entsprechende Richtwert 31, für den die Entscheidung getroffen wird.

Der zeitliche Verlauf in FIG 2 stellt sich wie folgt dar: Zunächst wird ein erster Datenwert DW1 als Richtwert RW in Form des Datenwertes 31 angenommen und gespeichert. Daraufhin werden eine Reihe von weiteren Datenwerten 33 gemessen, registriert und, wie im Zusammenhang mit FIG 1 erläutert, wird zu jedem weiteren Datenwert 33 - die zunächst allesamt Rauschwerte 33 darstellen - ein entsprechender Glättwert bestimmt, der Teil der Entscheidungskurve 35 wird. In jedem Fall wird entschieden, ob der Glättwert außerhalb oder innerhalb der Bandbreite BB liegt. Bis zu dem in FIG 2 dargestellten zweiten Datenwert DW2 in Form des weiteren Datenwertes 31 liegt kein Ereignis vor. Vielmehr zeigt sich, dass ein Datenwert 33 in Form eines Rauschwertes 33 auch außerhalb der Bandbreite BB liegen kann, ohne dass auf ein Ereignis erkannt wird. Bei üblichen Verfahren würde dies zur Anzeige eines Ereignisses führen, was erstens eine Fehlanzeige wäre, zweitens zu einer erhöhten Datenmenge führen würde und drittens die Übersichtlichkeit bei einer Prozesskontrolle stören würde, da der Beobachter bei komplexen Anlagen mit einer Vielzahl von Anzeigen beschäftigt ist. Bei der besonders bevorzugten Ausführungsform des hier erläuterten Verfahrens gemäß dem neuen Konzept führt aber ein außerhalb der Bandbreite liegender Datenwert 33 in Form eines Rauschwertes 33 nicht zur Anzeige eines Ereignisses, da der zugehörige Verlauf einer Entscheidungskurve 35 innerhalb der Bandbreite BB verbleibt. Die Aussagekraft der Entscheidungskurve 35 wird dadurch erhöht, dass beispielsweise zur Ermittlung des Glättwertes zu dem mit einem Pfeil 35 gekennzeichneten Datenwert 33 sowohl eine Anzahl von vorhergehenden Datenwerten vDW für eine angemessene Filterfunktion berücksichtigt werden, als auch eine Anzahl von dem gleichen Datenwert nachfolgenden Datenwerten nDW für die angemessene Filterfunktion zur Bestimmung der Entscheidungskurve 35 berücksichtigt werden. Auf diese Weise erfolgt zwar eine kurzzeitig zeitversetzte Durchführung der Entscheidung, andererseits wird jedoch die Verlässlichkeit der Entscheidung aufgrund des Verlaufs der Entscheidungskurve 35 erhöht.

Wie in FIG 2 verdeutlicht ist, wird lediglich im Falle einer tatsächlichen signifikanten Signaländerung die Entscheidungskurve 35 über die Bandbreite BB1 gehoben. Dies wird hauptsächlich ausgelöst durch den Datenwert 31, der als zweiter Datenwert DW2 als neuer Richtwert RW angenommen und gespeichert wird. Durch das Einbeziehen des Datenwertes 31 in Form des zweiten Datenwertes DW2 wird nämlich die Entscheidungskurve 35 über die Bandbreite BB1 gehoben, so dass für diesen Fall entschieden wird, dass in der Tat ein Ereignis vorliegt. Der zweite Datenwert DW2 wird als nächster Richtwert RW gespeichert. Bei der Prozessanalyse wird ein Ereignis angezeigt und zwar in Form der tatsächlichen Größe des Ereignisses, nämlich in Form des zweiten Datenwertes DW2 und nicht wie bei üblichen Verfahren in Form eines Mittelwertes. Die weiteren Datenwerte 33 liegen entweder innerhalb der in Bezug auf den zweiten Datenwert DW2 festgelegten Bandbreite BB2 oder nur leicht außerhalb der Bandbreite BB2. Keiner der verbleibenden Datenwerte 33 vermag es, die durch Glättwerte bestimmte Entscheidungskurve 35 über die Bandbreite BB2 zu heben, auch wenn ein Teil der Datenwerte 33 außerhalb der Bandbreite BB2 liegt. Sie erweisen sich also im Unterschied zu üblichen Verfahren, die mit Originaldaten arbeiten, allesamt als Rauschwerte. Dies führt zu einer erheblichen Datenreduktion bei dem Verfahren gemäß der bevorzugten Ausführungsform.

FIG 3 zeigt das Realergebnis einer Messung an einer Turbine, mit einer in Form von Punkten dargestellten Anzahl von originalen Messwerten 41. Das Ergebnis einer bei üblichen Verfahren genutzten Mittelung ist zum Vergleich in Form der Mittelwertkurve 43 gezeigt. Dabei ist zu beachten, dass im Bereich des Zeitschrittes "97" die originalen Daten 41 erheblich oberhalb des Wertes der Mittelwertkurve 43 liegen. Für den Anlagenüberwacher ergibt sich für diesen in FIG 3 dargestellten Fall eines plötzlichen Ereignisses zwar die Anzeige des Ereignisses als solches, jedoch ist dieses in seinem Ausmaß fast um ein Drittel geringer angezeigt als es tatsächlich der Fall ist. Wie in FIG 3 durch den Verlauf der Kurve 45 von Richtwerten gezeigt ist, wird auch bei der Kurve 45 von Richtwerten das Ereignis als solches in Form einer Signalspitze kenntlich. Allerdings ist im Verlauf der Kurve 45 zu sehen, dass die Signalspitze auch in ihrer durch die Originaldaten 41 vorgegebenen Originalstärke angezeigt wird und somit einer Prozessanalyse zur Verfügung gestellt ist. Bei dem Verfahren gemäß der bevorzugten Ausführungsform erfolgt eine Datenreduktion also nicht zu Lasten der quantitativen Aussage betreffend die Prozessdaten.

Insbesondere bei Anlagenüberwachungen werden Daten, beispielsweise in Form einer Folge von zeitlich nacheinander eingehenden Datenwerten 31, 33, nur dann in Form eines Richtwertes RW abgespeichert, wenn ein relevantes Ereignis vorliegt. Dazu wird ein Verfahren zur Datenauswertung genutzt, bei dem ein Richtwert RW und eine eine Abweichung vom Richtwert RW angebende Bandbreite BB zur Beurteilung, ob ein Ereignis vorliegt, festgelegt wird. Bei stark verrauschten Daten besteht das Problem, dass bei zu niedriger Bandbreite vor allem Rauschereignisse registriert werden, was zu einer erhöhten Datenmenge führt. Bei zu großer Bandbreite kann ein Ereignis verloren gehen. Deshalb ist gemäß dem neuen Konzept des Verfahrens 1 vorgesehen, dass entschieden wird, ob ein aus den Datenwerten 31, 33 ermittelter Glättwert GW außerhalb oder innerhalb der Bandbreite BB liegt; und (a) für den Fall, dass der Glättwert GW außerhalb der Bandbreite BB liegt, ein weiterer Richtwert RW auf Grundlage eines oder mehrerer aktueller Datenwerte angenommen wird, und (b) für den Fall, dass der Glättwert GW innerhalb der Bandbreite BB liegt, der bestehende Richtwert RW beibehalten wird und der aktuelle Datenwert als Teil eines Ergebnisses angegeben wird.

## Patentansprüche

1. Verfahren (1) zur Datenauswertung einer Folge von Datenwerten (31, 33), bei dem
- ein Richtwert (RW) und eine eine Abweichung vom Richtwert (RW) angebende
Bandbreite (BB) zur Beurteilung, ob bei den Datenwerten (31, 33) ein Ereignis vorliegt, festgelegt wird;
**dadurch gekennzeichnet, dass**
- entschieden wird, ob ein aus den Datenwerten (31, 33) ermittelter Glättwert (GW) außerhalb oder innerhalb der Bandbreite (BB) liegt; und
- (a) für den Fall, dass der Glättwert (GW) außerhalb der Bandbreite (BB) liegt, ein weiterer Richtwert (RW) auf Grundlage eines oder mehrerer aktueller Datenwerte angenommen wird, und
- (b) für den Fall, dass der Glättwert (GW) innerhalb der Bandbreite (BB) liegt, der bestehende Richtwert (RW) beibehalten wird;
- der aktuelle Datenwert als Teil eines Ergebnisses ausgegeben wird.

2. Verfahren nach Anspruch 1,
**dadurch gekennzeichnet, dass**
- ein erster Datenwert (DW1) als Richtwert (RW) angenommen wird;
- ein zweiter Datenwert (DW2) angenommen wird;
- zu dem zweiten Datenwert (DW2) der Glättwert ermittelt wird, und
- (a) für den Fall, dass der Glättwert (GW) außerhalb der Bandbreite (BB) liegt, der zweite Datenwert (DW2) als der weitere Richtwert (RW) angenommen wird, und
- (b) für den Fall, dass der Glättwert (GW) innerhalb der Bandbreite (BB) liegt, der bestehende Richtwert (RW) beibehalten wird.

3. Verfahren nach Anspruch 2,
**dadurch gekennzeichnet, dass**
der Glättwert (GW) ermittelt wird, indem
- zu dem zweiten Datenwert (DW2) eine Anzahl von den zweiten Datenwert (DW2) umgebenden Datenwerten gewählt wird; und der Glättwert ermittelt wird, und
mit einer Filterfunktion (19) unter Berücksichtigung des zweiten Datenwertes (DW2) und der Anzahl von den zweiten Datenwert (DW2) umgebenden Datenwerten der Glättwert (GW) berechnet wird.

4. Verfahren zur Datenauswertung, insbesondere nach Anspruch 1, in Form eines zeitlich linearen Verfahrens zur Aufnahme von Datenwerten (DW1, DW2) in Form von Prozessdaten.

5. Verfahren nach Anspruch 4, bei dem
- ein Richtwert (RW) und eine eine Abweichung vom Richtwert (RW) angebende
Bandbreite (BB) zur Beurteilung, ob ein Ereignis vorliegt, festgelegt wird;
- ein erster Datenwert (DW1) als Richtwert (RW) gespeichert wird;
**dadurch gekennzeichnet, dass**
- ein zweiter Datenwert (DW2) festgehalten wird;
- zu dem zweiten Datenwert (DW2) ein Glättwert (GW) ermittelt wird;
- entschieden wird, ob der Glättwert (GW) außerhalb oder innerhalb der Bandbreite (BB) liegt;
- (a) für den Fall, dass der Glättwert (GW) außerhalb der Bandbreite (BB) liegt, der zweite Datenwert (DW2) als nächster Richtwert (RW) gespeichert wird, und
(b) für den Fall, dass der Glättwert (GW) innerhalb der Bandbreite (BB) liegt, der erste Datenwert (DW1) als Richtwert (RW) beibehalten wird.

6. Verfahren nach Anspruch 5,
**dadurch gekennzeichnet, dass** der Glättwert (RW) ermittelt wird, indem
- zu dem zweiten Datenwert (DW2) eine erste Anzahl von dem zweiten Datenwert (DW2) vorhergehenden Datenwerten (vDW) gewählt wird und eine zweite Anzahl von dem zweiten Datenwert (DW2) nachfolgenden Datenwerten (nDW) gewählt wird;
und
- mit einer Filterfunktion (19) unter Berücksichtigung des zweiten Datenwertes (DW2) und der ersten und zweiten Anzahl von Datenwerten (DW1, DW2) der Glättwert (GW) berechnet wird.

7. Verfahren nach Anspruch 6,
**dadurch gekennzeichnet, dass**
die Filterfunktion (19) in Form eines eindimensionalen Binomialfilters gebildet ist.

8. Verfahren nach Anspruch 6,
**dadurch gekennzeichnet, dass**
die Filterfunktion (19) in Form eines eindimensionalen Rechteckfilters gebildet ist.

9. Vorrichtung zur Datenauswertung einer Folge von Datenwerten (31, 33), aufweisend
- Mittel zum Festlegen eines Richtwertes (RW) und einer eine Abweichung vom Richtwert (RW) angebenden Bandbreite (BB) zur Beurteilung, ob ein Ereignis bei den Datenwerten (31, 33) vorliegt;
**gekennzeichnet durch**
- Mittel zur Ermittlung eines Glättwertes (GW) aus den Datenwerten (31, 33); und
- Mittel zur Entscheidung, ob der Glättwert (GW) außerhalb oder innerhalb der Bandbreite (BB) liegt;
- (a) Mittel zur Annahme eines weiteren Richtwerts (RW) auf Grundlage eines oder mehrerer aktueller Datenwerte, für den Fall, dass der Glättwert (GW) außerhalb der Bandbreite (BB) liegt,
und
- (b) Mittel zum Beibehalten des bestehenden Richtwerts (RW), für den Fall, dass der Glättwert (GW) innerhalb der Bandbreite (BB) liegt,
- Mittel zum Ausgeben des aktuellen Datenwerts als Teil eines Ergebnisses.

10. Vorrichtung zur Datenauswertung nach Anspruch 9,
weiter **gekennzeichnet durch**
- Mittel zur Annahme eines ersten Datenwerts (DW1) als Richtwert (RW);
- Mittel zur Annahme eines zweiten Datenwerts (DW2);
- Mittel zur Ermittlung eines Glättwertes (GW) zu dem zweiten Datenwert (DW2); wobei
- (a) Mittel zur Annahme als Mittel zur Annahme des zweiten Datenwerts (DW2) als den weiteren Richtwert (RW), für den Fall, dass der Glättwert (GW) außerhalb der Bandbreite (BB) liegt, ausgebildet sind,
und
- (b) Mittel zum Beibehalten als Mittel zum Beibehalten des ersten Datenwerts (DW1) als Richtwert (RW), für den Fall, dass der Glättwert (GW) innerhalb der Bandbreite (BB) liegt, ausgebildet sind.

11. Vorrichtung nach Anspruch 9 oder 10 in Form einer Prozessleitkonsole, insbesondere zur Überwachung einer Turbine.

12. Computer-Programmprodukt, welches auf einem computerlesbaren Medium speicherbar ist und einen Software-Code-Abschnitt aufweist, welcher geeignet ist, eine Computervorrichtung zur Ausführung des Verfahrens (1) gemäß einem der Ansprüche 1 bis 8 zu veranlassen, wenn das Produkt auf der Computervorrichtung ausgeführt wird.

13. Computerlesbares Medium, auf dem das ComputerprogrammProdukt gemäß Anspruch 12 gespeichert ist.
